# EUROPÄISCHE PATENTSCHRIFT

(11) **EP 0 556 541 B1**
(45) Veröffentlichungstag und Bekanntmachung des Hinweises auf die Patenterteilung: **06.12.1995**
(21) Anmeldenummer: 93100115.0
(22) Anmeldetag: 07.01.1993
(51) Int. Cl.: B60D 1/06

(54) **Kupplungsvorrichtung**
Coupling device
Dispositif d'attelage

(30) Priorität: 15.02.1992 DE 4204615; 06.04.1992 DE 9204702 U
(43) Veröffentlichungstag der Anmeldung: 25.08.1993
(73) Patentinhaber: Firma Albert Berndes, D-32312 Lübbecke (DE)
(72) Erfinder: Berndes, Karl Josef, W-4990 Lübbecke (DE)
(74) Vertreter: Stracke, Alexander, Dipl.-Ing.

(56) Entgegenhaltungen:
- DE-A- 3 917 288
- DE-U- 8 901 811
- GB-A- 623 434
- LU-A- 55 301
- US-A- 3 175 845
- US-A- 3 446 520

## Beschreibung

Die vorliegende Erfindung betrifft eine Kupplungsvorrichtung gemäß dem Oberbegriff des Anspruches 1.

Eine Kugelkopfkupplung mit den genannten Merkmalen ist aus der DE-A-39 12 288 bekannt.

Grundsätzlich hat sich die Funktion dieser Kupplungsvorrichtung, auch im rauhen Alltagsbetrieb bewährt.
Um die Kugel aus der Kugelpfanne zu lösen, wird die Kugelkopfkupplung in geschlossener Stellung, bei der diese die Kugel übergreift, mit Hilfe eines höhenverstellbaren Ständers, an dem ein Stützrad angebracht ist und auf dem in nicht fahrbereiter Stellung der Anhänger aufliegt, angehoben, wobei dies üblicherweise über einen Kurbelantrieb erfolgt, mit dem die Höhenverstellung des Ständers durchführbar ist.
Gleichzeitig mit dem Anheben der Anhängerkupplung wird, unter Anhebung der gesamten Pritsche des Fahrzeuges auch die Kugel mitgenommen.

Nach einem Lösen des Handhebels gleitet die Kugel um die angehobene Strecke aus der Kugelpfanne, so daß der Anhänger und das Zugfahrzeug getrennt sind.

Diese Art des Lösens der Kupplungsverbindung entspricht jedoch nicht den Vorschriften und Sicherheitsansprüchen, da insbesondere die Verbindung zwischen der Aufnahmevorrichtung und der Pritschenfläche unnötig belastet wird.

Aus der US-A-34 46 520 ist eine weitere, allerdings gattungsfremde Kupplungsvorrichtung bekannt.

Die Kugelkopfkupplung dieser Kupplungsvorrichtung ist nicht an einem Auflieger-Anhänger befestigbar, da der Handhebel an der Oberseite der Kugelkopfkupplung angeordnet ist, während eine solche Kugelkopfkupplung, die für einen Auflieger-Anhänger geeignet ist, einen seitlich angeordneten Handhebel aufweisen muß.
Die zuvor beschriebene Problematik, die sich ausschließlich beim Lösen der Kugel aus der Kugelpfanne bei einem Auflieger-Anhänger und einem mit einer Pritschenfläche versehenen Zugfahrzeug ergibt, tritt bei dieser Kupplungsvorrichtung nicht auf.

Der vorliegenden Erfindung liegt daher die Aufgabe zugrunde, eine Kupplungsvorrichtung der gattungsgemäßen Art so zu gestalten, daß ein einfaches Lösen der Verriegelung zwischen der Kugelkopfkupplung und der Kugel möglich wird. Weiter soll verhindert werden, daß ein unbeabsichtigtes Öffnen der Kugelpfanne in jeder Betriebssituation garantiert ausgeschlossen wird.

Diese Aufgabe wird durch eine Kupplungsvorrichtung mit den Merkmalen des Anspruches 1 gelöst.

Dadurch, daß eine Blockiereinrichtung vorgesehen ist, mit der der Handhebel in Entriegelungsstellung gehalten wird, ist prinzipiell eine Einhandbedienung beim Lösen der Verriegelung möglich, wobei vor einem Anheben der Kugelkopfkupplung mittels des höhenverstellbaren Ständers der Handhebel betätigt und die Kugelpfanne entriegelt wird. Die Blockiereinrichtung schnappt in dieser Offenstellung, beispielsweise durch Federdruck, so in oder auf den Handhebel, daß dieser in der Offenstellung, in der die Kugelpfanne frei bewegbar ist, gehalten wird. Durch Anheben der Kugelkopfkupplung, beispielsweise durch Hochdrehen des Ständers, über den Scheitelpunkt der Kugel hinaus, wird eine Stellung erreicht, in der der Anhänger von dem Zugfahrzeug gelöst werden kann.

Beim Hochfahren der Kugelkopfkupplung wird durch die Kugel die Kugelpfanne verdreht, wobei durch diese Verdrehung die Blockiereinrichtung derart betätigt wird, daß sie ihre Blockierstellung gegenüber dem Handhebel aufgibt, also in eine Ausgangsstellung zurückverschwenkt wird.
Damit ist der Handhebel wieder im ursprünglichen Sinne frei bewegbar.

Neben der sehr einfachen Bedienbarkeit der Kupplungsvorrichtung zum Entkuppeln, die praktisch einhändig möglich ist, stellt sich das nunmehr für die Aufnahmevorrichtung belastungsfreie Entkuppeln als Vorteil dar.

Im übrigen ist die Realisierung der Erfindung mit einem nur geringen baulichen Aufwand möglich, so daß die Herstellung der Kupplungsvorrichtung sehr preiswert durchführbar ist.

Eine die Sicherheit der Kupplungsvorrichtung insgesamt gleichfalls erhöhende Maßnahme nach der Erfindung sieht vor, daß ein quer zum Handhebel verschiebbares Riegelteil vorgesehen ist, das den Handhebel in Schließstellung der Kugelpfanne durch Ein- oder Übergreifen blockiert.

Dadurch wird eine sichere Arretierung der Kugelpfanne auch für den Fall erreicht, daß durch einen Bruch der Feder, mit der der Handhebel in Richtung Verriegelungsstellung gedrückt wird, kein Öffnen der Kugelpfanne möglich ist. Auch dann nicht, wenn die im Fahrbetrieb üblichen Erschütterungen auftreten.

Ohne daß das Riegelteil im Sinne eines Lösens betätigt wird, kann der Handhebel nicht mehr verschwenkt werden.
Die Feder, beispielsweise eine Schenkel- oder eine Zugfeder, übernimmt nunmehr keine Sicherungsfunktion, sondern dient lediglich einer Handhabungserleichterung.

Das Riegelteil, das nach einer vorteilhaften Ausgestaltung einen federbelasteten Riegelbolzen aufweist, kann direkt in eine entsprechende Ausnehmung des Handhebels eingreifen. Denkbar ist aber auch, den Riegelbolzen in Blockierstellung in dem Schwenkbereich anzuordnen, der den Handhebel außer Eingriff bringt.
Dabei ist es zweckmäßig, den Riegelbolzen mit geringem Abstand zum Handhebel anzuordnen, so daß eine die Betätigung des Riegelbolzens möglicherweise erschwerende Reibung ausgeschlossen ist.

Eine besonders einfache Montage des Riegelteiles an der Kugelkopffkupplung im übrigen läßt sich dadurch erreichen, daß das Riegelteil in bezug auf die Schwenkachse, auf der der Handhebel gelagert ist, in einem der Kugelpfanne gegenüberliegenden Bereich angeordnet ist, wobei der Riegelbolzen des Riegelteiles den Handhebel unmittelbar oberhalb überragt. Ein Gehäuse, in dem eine auf dem Riegelbolzen geführte Druckfeder gelagert ist, ist dabei an der Unterseite des Befestigungsflansches festgelegt. Hierbei durchtritt der Riegelbolzen zwei sich gegenüberliegende Wände des Gehäuses. Während ein Ende des Riegelbolzens den Handhebel überragt, dient das andere als Griffstück, mit dem der Riegelbolzen gegen die Federkraft aus einer Betriebsstellung herausgezogen werden kann, so daß durch Verschwenken des Handhebels die Arretierung der Kugelpfanne gelöst werden kann.

Nach einem weiteren Gedanken der Erfindung ist vorgesehen, daß an dem Riegelbolzen ein Markierungsteil angebracht ist, das zusammen mit einer auf dem Gehäuse vorgesehenen Skalierung die jeweilige Stellung des Riegelbolzens anzeigt. Somit ist erkennbar, wann der Riegelbolzen aus dem Schwenkbereich des Handhebels gezogen ist und dieser betätigbar ist.

Die Aufnahmevorrichtung, die auf der Pritschenfläche des Zugfahrzeuges befestigbar ist und die einen Schaft aufweist, an dem das Kugelteil befestigt ist, kann so ausgebildet sein, daß der Schaft an einem Bock festgelegt ist, der an einer an tragenden Teilen des Zugfahrzeuges angeschlossenen Traverse befestigt ist.
Durch die Traverse, die beispielsweise mit den tragenden Teilen verschweißt sein kann und die üblicherweise quer zur Pritschenfläche verläuft, wird der Bock sicher gehalten.
Dabei besteht die Möglichkeit, den Bock mit der Traverse zu verschrauben, so daß nicht nur eine leichtere Montage gegeben ist, sondern auch eine einfache Demontagemöglichkeit für den Fall, daß die Pritschenfläche für eine andere Funktion bestimmt ist.
Weiter kann es vorteilhaft sein, den Schaft, an dem die Kugel befestigt ist, mit dem Bock zu verschrauben, wobei sinnvollerweise hierzu eine selbstsichernde Mutter vorzusehen ist, durch die verhindert wird, daß die beim Fahrbetrieb üblicherweise auftretenden Erschütterungen die Schraubverbindung lösen.

Weitere vorteilhafte Ausgestaltungen der Erfindung sind in den Unteransprüchen gekennzeichnet.

Ausführungsbeispiele der Erfindung werden nachfolgend anhand der beigefügten Zeichnungen beschrieben.

Es zeigen:
- Fig. 1: eine Unteransicht der Kugelkopfkupplung,
- Fig. 2 bis 4: jeweils einen Längsschnitt durch die Kugelkopfkupplung in jeweils unterschiedlichen Gebrauchsstellungen,
- Fig. 5 und 6: jeweils einen Querschnitt durch die Kugelkopfkupplung gleichfalls in verschiedenen Gebrauchsstellungen,
- Fig. 7: einen Längsschnitt durch ein weiteres Ausführungsbeispiel der Erfindung,
- Fig. 8: eine Draufsicht auf die Kugelkopfkupplung nach der Fig. 7,
- Fig. 9: einen Teilausschnitt der Kupplungsvorrichtung in einem Längsschnitt dargestellt,
- Fig. 10: einen Längsschnitt durch die Aufnahmevorrichtung,
- Fig. 11: eine Draufsicht auf die Aufnahmevorrichtung.

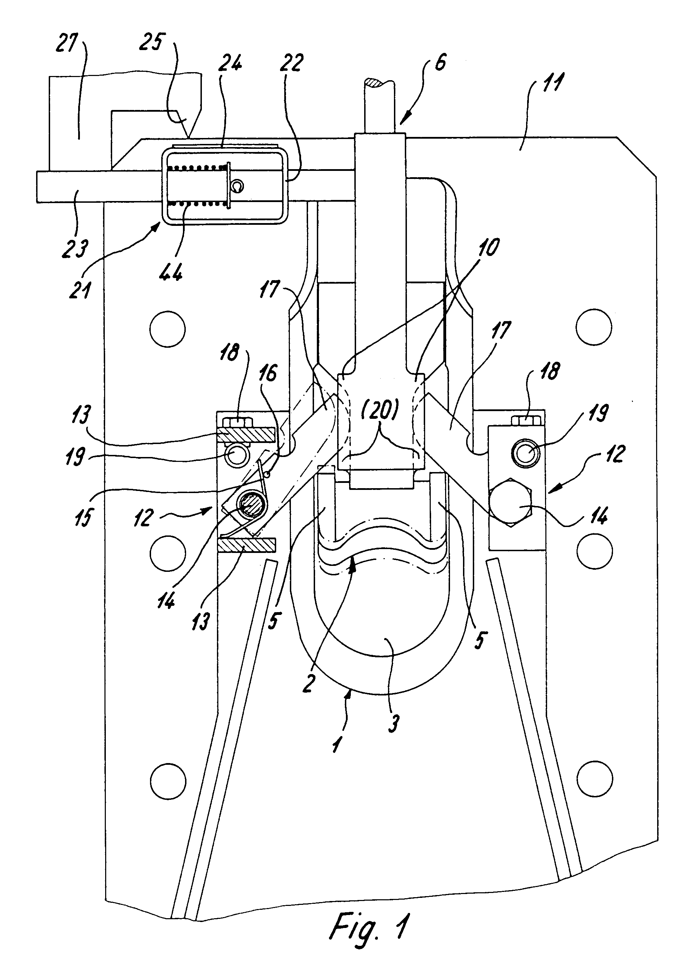

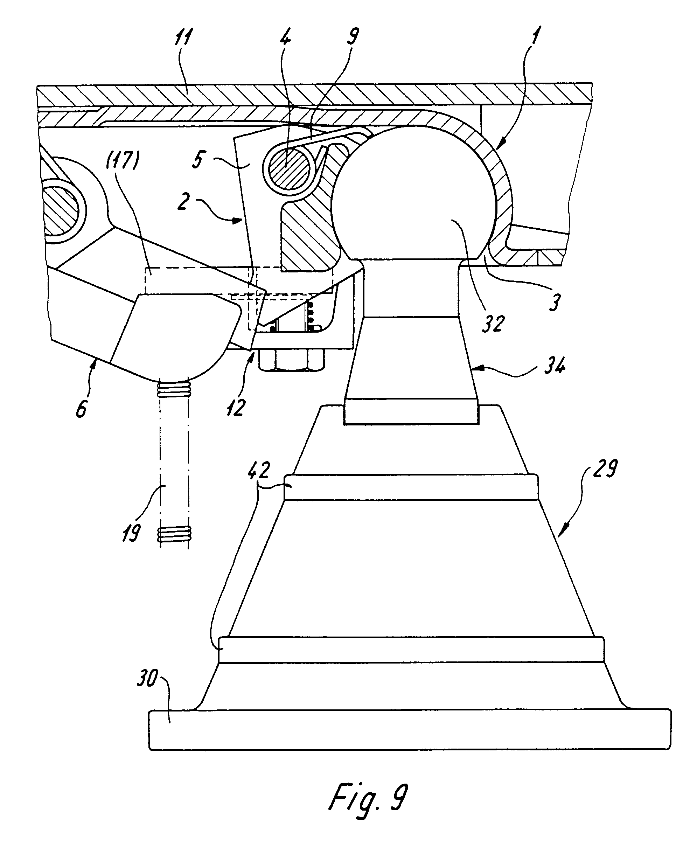

In den Fig. 1 bis 6 ist eine Kugelkopfkupplung dargestellt, die zusammen mit einer in den Fig. 9 bis 11 gezeigten Aufnahmevorrichtung die Kupplungsvorrichtung bilden.

Dabei besteht die Kugelkopfkupplung in ihren wesentlichen Merkmalen aus einem Befestigungsflansch 11, der mit einem nicht dargestellten Aufliegeranhänger verbindbar ist.
An der Unterseite des Befestigungsflansches 11 ist, beispielsweise durch Verschweißen, ein Kupplungsbehäuse 1 befestigt.
Dieses beherbergt eine Kugelpfanne 2, die auf einem Bolzen 4 schwenkbar gelagert ist, wobei gleichfalls auf dem Bolzen 4 eine gespannte Schenkelfeder 9 geführt ist, die sich einerseits am Rücken der Kugelpfanne 2 und andererseits an der Innenseite des Kupplungsgehäuses 1 abstützt.

In dem durch die Rückseite der Kugelpfanne 2 begrenzten hinteren Innenraum des Kupplungsgehäuses 1 ist quer zu dessen Längsachse verlaufend eine Schwenkachse 7 angeordnet, die beispielsweise durch Vernieten in den Seitenwänden des Kupplungsgehäuses 1 festgelegt ist.

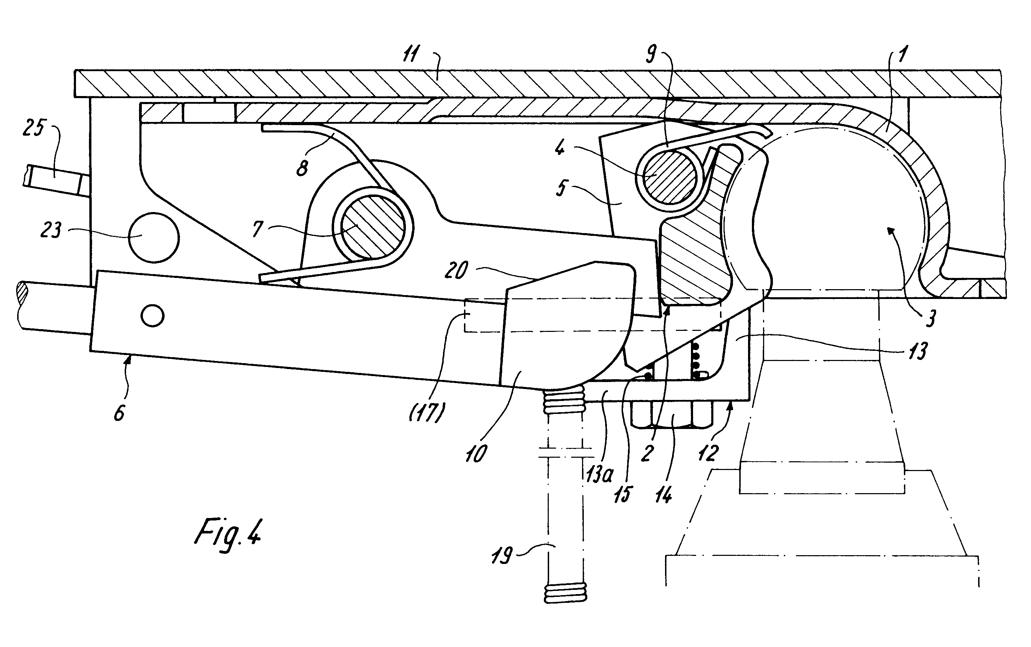

An der Schwenkachse 7 ist ein Handhebel 6 schwenkbar gelagert, der an einem Ende mit einem Griffstück 26 versehen ist, mit dem der Handhebel 6 insgesamt betätigbar ist. Mit dem anderen Ende erstreckt sich der Handhebel 6 in Richtung der Kugelpfanne 2, wobei er sich in deren geschlossener Stellung, wie in der Fig. 4 gezeigt, an der Rückseite der Kugelpfanne 2 abstützt.

Weiter ist auf der Schwenkachse 7 eine Schenkelfeder 8 geführt, die sich einerseits an der Oberseite des Kupplungsgehäuses und andererseits am Rücken des Handhebels 6 abstützt und diesen ständig mit seinem der Kugelpfanne 2 zugewandten Ende in Richtung der Oberseite des Kupplungsgehäuses 1 drückt.

Durch Ziehen des Griffstücks 26 in Richtung des Befestigungsflansches 11 wird der Handhebel 6 aus seiner Arretierposition, wie sie in der Fig. 4 dargestellt ist, geschwenkt, so daß die Schenkelfeder 9 die Kugelpfanne 2 um den Bolzen 4 frei drehen kann und so entweder das Kupplungsmaul 3 öffnet, um durch Freigeben einer einliegenden Kugel 32 einen Entkupplungsvorgang einzuleiten oder um der Kugel 32 einen freien Zugang in das Kupplungsmaul 3 bieten.

An zwei sich gegenüberliegenden parallelen Schenkeln des Kupplungsgehäuses 1 ist jeweils eine Blockiereinrichtung 12 festgelegt.
Diese besteht aus zwei abständig zueinander verlaufenden, mit den Schenkeln des Kupplungsgehäuses 1 fest verbundenen Lagerteilen 13, die gemeinsam mit die beiden Lagerteile 13 miteinander verbindenden Auflager 13a eine U-förmige Gestalt ergeben.

Durch das Auflager 13a ist eine Schraube 14 geführt, die sich mit ihrem Kopf einerseits am Auflager 13a und einer aufgeschraubten Mutter auf dem Schenkel des Kugelgehäuses 1 abstützt.

Die Schraube 14 dient gleichzeitig als Drehlager für einen Schwenkriegel 17, in dem ein Anschlag 16 festgesetzt, an dem eine Schenkelfeder anliegt, die sich andererseits an einem Lagerteil 13 abstützt, so daß der Schwenkriegel 17 unter Federspannung gehalten wird.

An seinem der Kugelpfanne 2 zugewandten Ende ist der Handhebel 6 mit zwei Seitenstücken 10 versehen, die in Richtung des Befestigungsflansches 11 parallel zum Befestigungsflansch 11 Anschlagflächen 20 aufweisen, an denen die Schwenkriegel 17 in Blockierstellung anliegen.

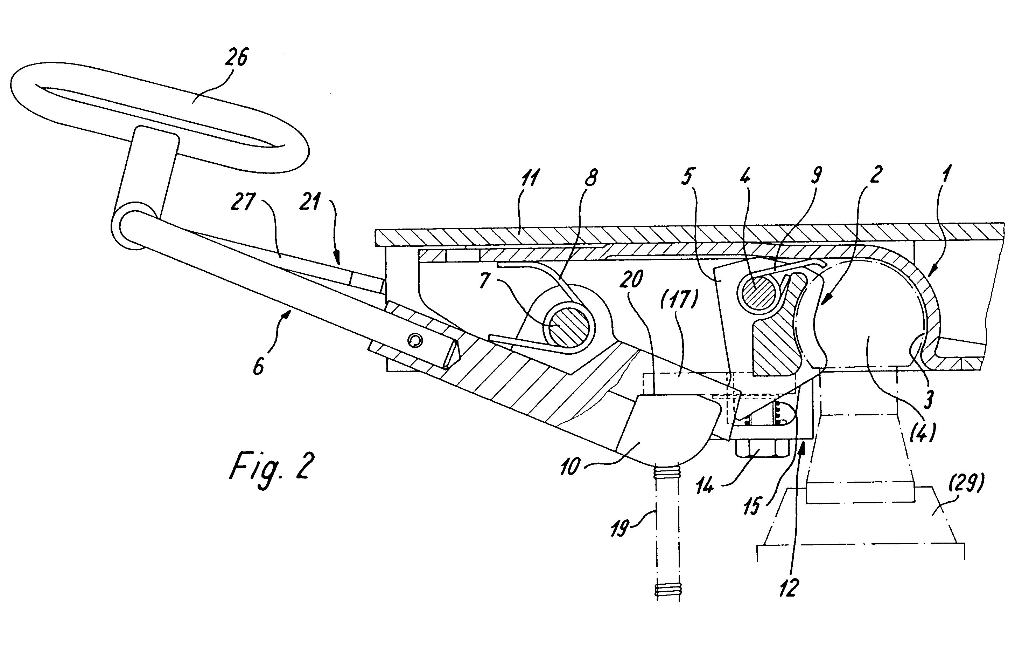

Bei der in den Fig. 1 und 2 gezeigten Entriegelungsstellung des Handhebels 6, bei der der Handhebel um die Schwenkachse 7 so verschwenkt wird, daß das der Kugelpfanne 2 zugewandte Ende aus ihrem blockierenden Wirkbereich herausgeführt wird, verschwenken die Schwenkriegel 17 in Richtung des Handhebels 6 und legen sich auf den Anschlagflächen 20 an.

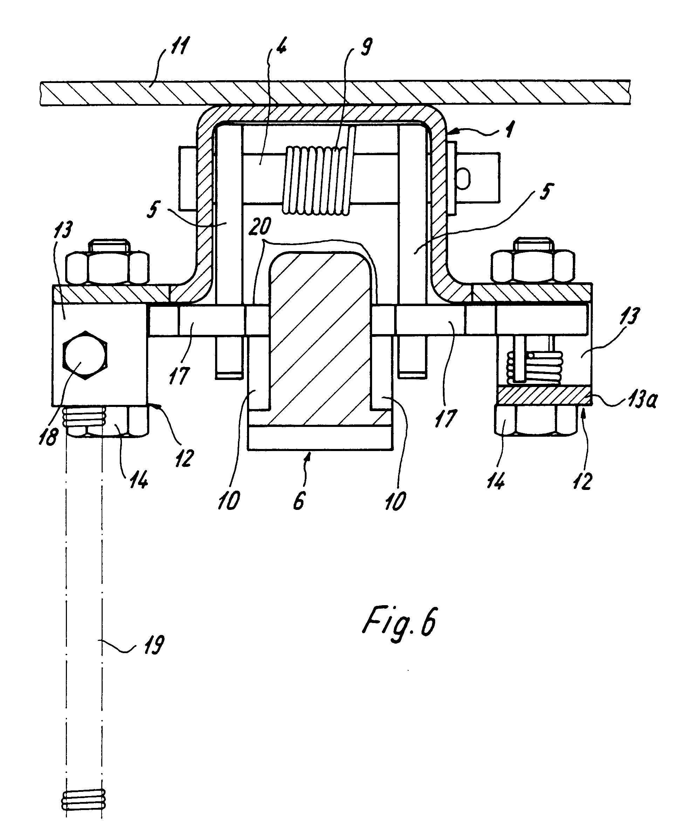

Auch bei einem Loslassen des Handhebels 6 kann dieser nicht mehr durch die Federkraft der Schenkelfeder 8 in Richtung des Befestigungsflansches 11 geschwenkt werden, so daß die in dem Kugelmaul 3 einliegende Kugel 4 unter Verdrehen der Kugelpfanne 2 um den Bolzen 4 aus der Kugelkopfkupplung herausgeführt werden kann.
Diese Stellung ist auch in den Fig. 6 und 9 zu erkennen.

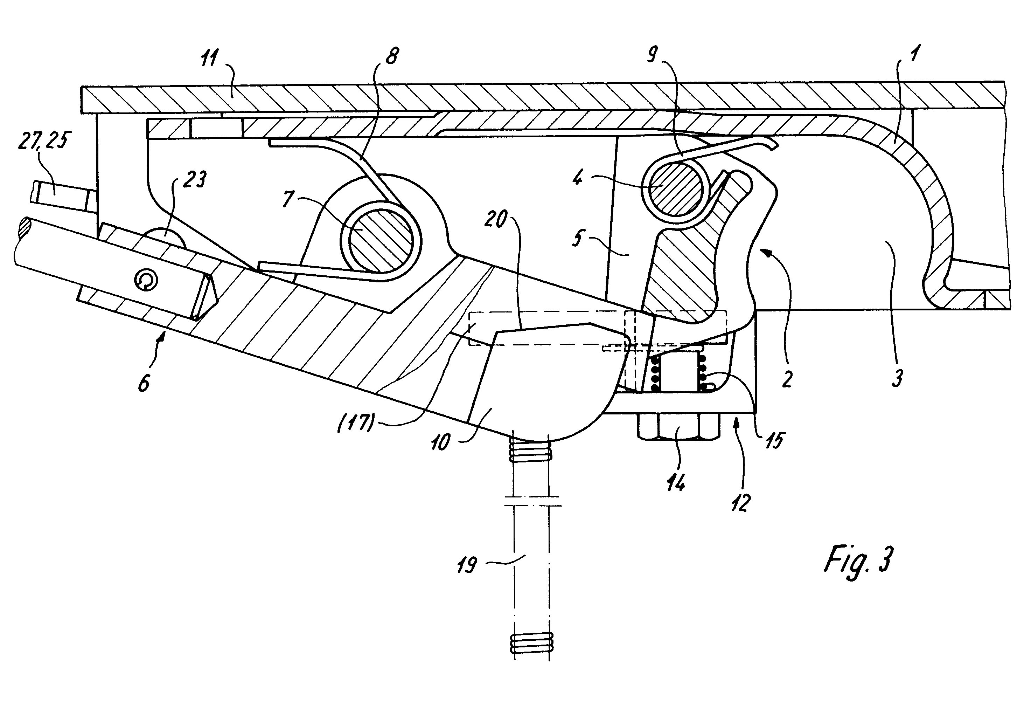

Beim Herausziehen der Kugel 4 wird, wie erwähnt, die Kugelpfanne 2 verschwenkt, wobei sich der untere Teil in Richtung des Handhebels 6 bewegt. Dabei bewegen sich gleichzeitig zwei Andruckschenkel 5, die Bestandteil der Kugelpfanne 2 sind und die jeweils an einem Schwenkriegel 17 anliegen. Indem sich die Andruckschenkel 5 in Richtung des Handhebels bewegen, werden gleichzeitig die Schwenkriegel 17 aus dem Bereich der Anschlagflächen 20 herausgeschwenkt, so daß der Handhebel 6 wieder frei in Richtung des Befestigungsflansches bewegbar ist. Durch das Öffnen des Kupplungsmaules 3 bzw. der Kugelpfanne 2 ist diese jedoch in den Schwenkbereich des Handhebels 6 bewegt worden, so daß sich nun der Handhebel 6 an der Unterseite der Kugelpfanne 2 abstützt, wie dies in der Fig. 3 dargestellt ist. Insofern wird die freie Schwenkbewegung des Handhebels 6 behindert.

Wird nun die Kugel wieder in die Kugelkopfkupplung eingeführt, so drückt diese die Kugelpfanne 2 an ihrer Oberseite um den Bolzen 4 herum, so daß sich der untere Bereich der Kugelpfanne 2 vom Handhebel 6 weg bewegt und dieser in eine Verriegelungsposition einschwenken kann, in der er sich an der Rückseite der Kugelpfanne 2 abstützt.

Um ein sicheres Andrücken der Kugelpfanne 2 an die Kugel 32 auch dann zu garantieren, wenn diese sich durch Abnutzung in ihrem Abmaß verändert, ist die Endseite des Handhebels 6, die der Kugelpfanne 2 zugewandt ist, abgeschrägt.

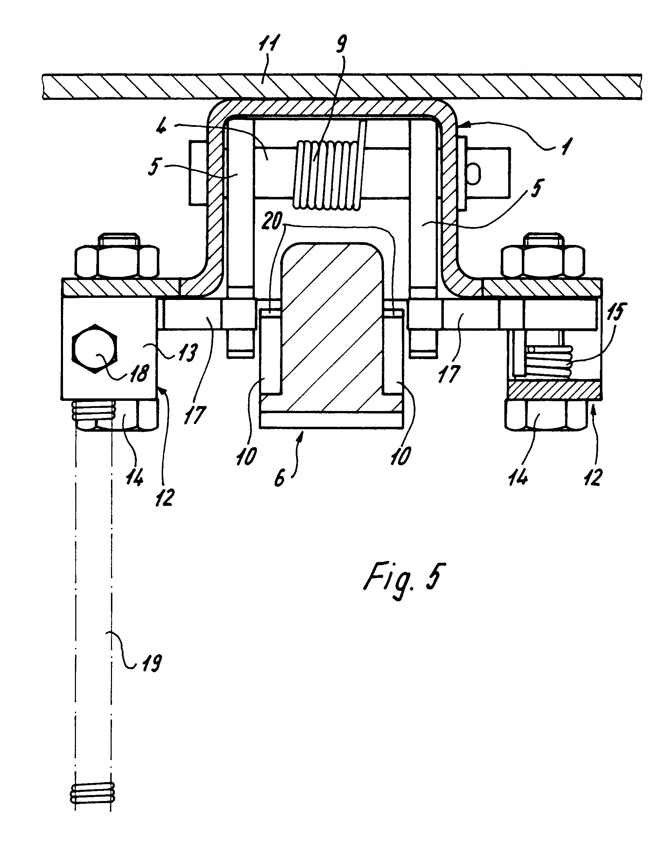

Die Blockierstellung des Handhebels 6 und gleichzeitige Außereingriffstellung der Schwenkriegel 17 ist in den Fig. 4 und 5 sehr deutlich zu erkennen, während die Offenstellung der Kugelpfanne 2 und die Stellung der Schwenkriegel 17 entsprechend der Fig. 3 in der Fig. 1 strichpunktiert gezeigt ist.

Sowohl in der Offenstellung der Kugelpfanne 2 (Fig. 3) als auch in der Blockierstellung (Fig. 4) liegen die Schwenkriegel 17 an den Seitenstücken 10 des Handhebels 6 an.

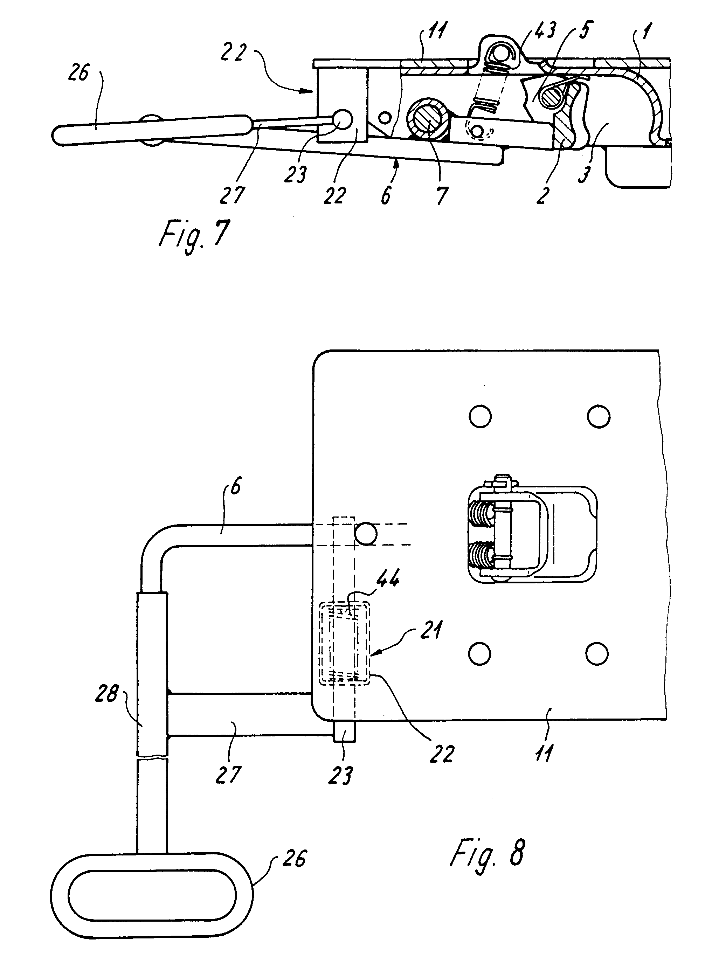

Um zu verhindern, daß der Handhebel 6 unbeabsichtigt, beispielsweise bei einem Bruch der Schenkelfeder 8, an deren Stelle auch eine in der Fig. 7 gezeigte Zugfeder 43 vorgesehen sein kann, aus seiner die Kugelpfanne 2 arretierenden Stellung herausgeschwenkt wird, ist ein Riegelteil 21 vorgesehen, das aus einem Gehäuse 22 sowie einem darin gelagerten Riegelbolzen 23 besteht, auf dem im Bereich des Gehäuses 22 eine Druckfeder 44 geführt ist.

Das Gehäuse 22 ist in den in den Fig. 1 und 8 gezeigten Ausführungsbeispielen an der Unterseite, also der dem Kupplungsgehäuse 1 zugewandten Seite des Befestigungsflansches 11, beispielsweise durch Verschweißen befestigt.

Der Riegelbolzen 23 ragt an zwei sich gegenüberliegenden Seiten des Gehäuses 22 so weit heraus, daß er in Gebrauchsstellung, nämlich dann, wenn der Handhebel 6 in Arretierstellung steht, diesen überragt.
Dabei ist das Riegelteil 21 und somit auch der Riegelbolzen 23 in bezug auf die Schwenkachse 7 in einem der Kugelpfanne 2 gegenüberliegenden Bereich angeordnet, so daß der beim Lösen des Handhebels 6 von diesem zu bestreichende Schwenkbereich versperrt ist.

Ein Lösen dieser Sicherung und somit ein mögliches beabsichtigtes Öffnen des Kupplungsmaules 3 kann erst erfolgen, wenn der Riegelbolzen 23 aus einer Blockierposition gegen die Federkraft der Druckfeder 44 herausgezogen wird. Diese Stellung ist in der Fig. 3 erkennbar. Dabei stützt sich der Riegelbolzen 23 mit seiner zugeordneten Stirnseite seitlich am Handhebel 6 ab, so daß bei einem erneuten Schließen des Kupplungsmaules 3 und einem Abschwenken des Handhebels 6 der Riegelbolzen 23 in seine Sperrposition oberhalb des Handhebels 6 gedrückt wird, wobei dies selbsttätig durch die Druckfeder 44 erfolgt.

Bei der in den Fig. 7 und 8 gezeigten Ausführung des Riegelteiles 21 ist eine Einhandbedienung möglich.
Dazu ist der Riegelbolzen 23 mittels einer Lasche 27 mit einer auf dem Handhebel 6 axial verschiebbar geführten Hülse 28 verbunden, an deren freiem Ende das Griffstück 26 befestigt ist.

Zum Lösen des Handhebels 6 aus einer Arretierposition wird mittels des Griffstücks 26 der Riegelbolzen 23 aus einer Riegelstellung gezogen. Anschließend wird durch Hochziehen des Griffstücks 26 der Handhebel 6 verschwenkt, so daß die Arretierung der Kugelpfanne 2 gelöst wird.

Am Riegelbolzen 23 bzw. an der Lasche 27 ist ein Markierungsteil 25 vorgesehen, das zusammen mit einer an dem Gehäuse 22 befestigten Skala 24 die Stellung des Riegelbolzens 23 anzeigt, so daß der Benutzer genau erkennen kann, ob der Riegelbolzen 23 den Handhebel 6 blockiert oder ob ein Lösen des Handhebels 6 möglich ist.

In der Fig. 9 ist eine an einem Bock 29 über einen Schaft 34 festgelegte Kugel 32 erkennbar, die in der Kugelpfanne 2 bzw. dem Kugelmaul 3 einliegt. Der Bock 29 weist zwei parallel zu einem mit der Pritsche eines Zugfahrzeuges verbindbaren Flansch 30 verlaufende Wülste 42 auf, die abständig zueinander angeordnet sind und eine Peilmarkierung darstellen. Mit Peilstäben 19, von denen jeweils einer mit den Blockiereinrichtungen 12 verbunden ist, kann zusammen mit den Wülsten 42 die jeweilige Höhenlage der Kugelkopfkupplung insgesamt erkannt werden. Dadurch ist erkennbar, ob die Kugel in der Kugelpfanne 2 einliegt, wobei dann der Peilstab 19 und der untere Wulst 42 in ihrer Markierung übereinstimmen, oder ob die Kugel aus der Kugelpfanne herausgezogen ist, so daß sich der Peilstab 19 in Deckung mit dem oberen Wulst 42 befindet. In vorteilhafter Weise ist der Peilstab 19 als Schraubenfeder ausgebildet.

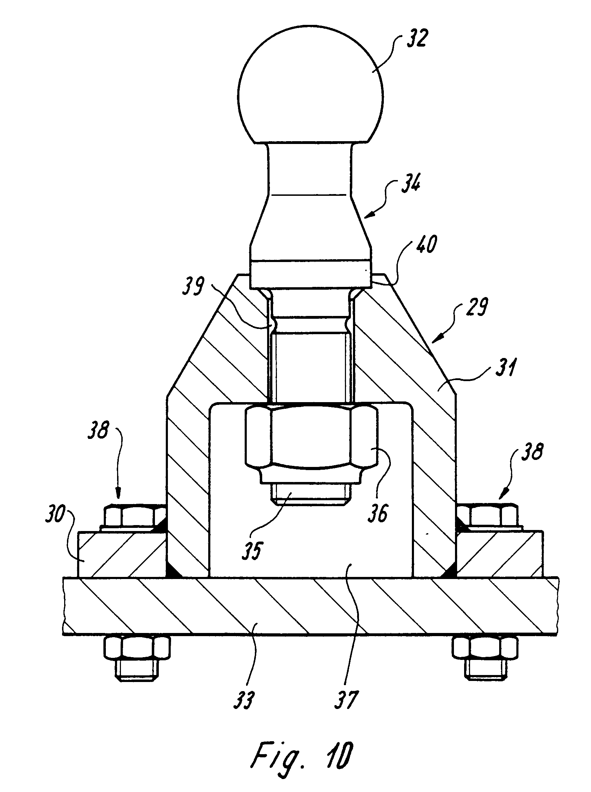

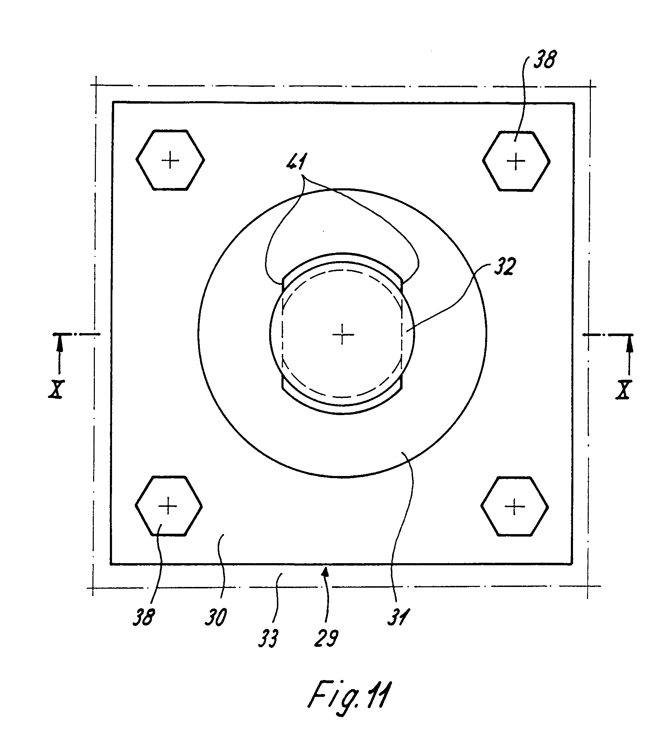

Wie die Fig. 10 und 11 zeigen, weist der Bock 29 ein Aufnahmeteil 31 auf, das mit dem Flansch 30, vorzugsweise durch Verschweißen, verbunden ist.

Der im Grundriß etwa quadratische Flansch 30 ist durch vier Schrauben 38, von denen jeweils eine in jedem Eckbereich des Flansches 30 vorgesehen ist, mit einer Traverse 33 verbunden.
Wie erwähnt, sind die Traverse 33 bzw. der Flansch 30 Bestandteil einer Pritschenfläche eines nicht dargestellten Zugfahrzeuges, wobei die Traverse 33 an tragenden Teilen des Zugfahrzeuges festlegbar ist.

Auf seiner dem Flansch 30 abgewandten Endseite ist das dort in seiner Außenkontur kegelstumpfförmig ausgebildete Aufnahmeteil 31 mit einer in Richtung auf die Traverse 33 sich erstreckenden Durchgangsbohrung 39 versehen, durch die ein Gewindebolzen 35 eines Schaftes 34 geführt ist. An dem dem Aufnahmeteil 31 abgewandten Ende ist der Schaft 34 mit der Kugel 32 versehen, auf die die Kugelkopfkupplung aufrastbar ist.

Der Schaft 34 liegt verdrehgesichert in einer Vertiefung 40 des Aufnahmeteiles 31 ein und ist durch eine auf dem Gewindebolzen 35 aufgedrehte selbstsichernde Mutter 36 festgelegt.
Das aus der Durchgangsbohrung 39 herausragende Ende des Gewindebolzens 35 sowie die Mutter 36 finden in einem Hohlraum 37 des Aufnahmeteiles 31 Platz, der auf der der Traverse 33 zugewandten Seite vorgesehen ist.

Zur Verdrehsicherung des Schaftes 34 weist dieser in seinem ansonsten kreisrunden Querschnitt zwei sich gegenüberliegende, parallel zueinander verlaufende Abflachungen 41 auf. Entsprechend diesen Abflachungen ist auch die Vertiefung 40 in ihrem Querschnitt gestaltet.

## Patentansprüche

1. Kupplungsvorrichtung mit einer an einem Auflieger-Anhänger befestigbaren Kugelkopfkupplung und einer mit der Pritschenfläche eines Zugfahrzeuges verbindbaren, mit einer Kugel (32) versehenen Aufnahmevorrichtung, wobei die Kugelkopfkupplung ein Kupplungsgehäuse (1) aufweist, an dessen Oberseite ein Befestigungsflansch (11) festgelegt ist, und mit einer schwenkbaren und in Schließstellung arretierbaren Kugelpfanne (2) und einem auf einer im Kupplungsgehäuse (1) angeordneten Schwenkachse (7) gelagerten Handhebel (6) versehen ist, der sich in Schließstellung der Kugelpfanne (2) an dieser rückseitig abstützt, wobei der Handhebel (6) durch eine Feder (8) in Richtung der Verriegelungsstellung gedrückt wird,
**dadurch gekennzeichnet,** daß eine Blockiereinrichtung (12) vorgesehen ist, mit der der Handhebel (6) in Entriegelungsstellung gehalten wird und die durch die Kugelpfanne (2) oder damit verbundene Teile außer Eingriff bringbar ist.

2. Kupplungsvorrichtung nach Anspruch 1, dadurch gekennzeichnet, daß die Blockiereinrichtung mindestens einen federbelasteten Schwenkriegel (17) aufweist, der quer zur Bewegungsrichtung des Handhebels (6) verschwenkbar ist und sich in Gebrauchsstellung blockierend an dem Handhebel (6) abstützt.

3. Kupplungsvorrichtung nach Anspruch 2, dadurch gekennzeichnet, daß der Schwenkriegel (17) beim Öffnen der Kugelpfanne (2) durch einen daran angeformten Andruckschenkel (5) aus der Blockierstellung herausdrückbar ist.

4. Kupplungsvorrichtung nach Anspruch 1, dadurch gekennzeichnet, daß ein quer zum Handhebel (6) verschiebbares Riegelteil (21) vorgesehen ist, das den Handhebel (6) in Schließstellung der Kugelpfanne (2) durch Ein- oder Übergreifen blockiert.

5. Kupplungsvorrichtung nach Anspruch 4, dadurch gekennzeichnet, daß das Riegelteil (21) aus einem Gehäuse (22), das an der Unterseite des Befestigungsflansches (11) festgelegt ist, und einem in dem Gehäuse (22) gelagerten, an zwei Seiten des Gehäuses (22) austretenden Riegelbolzens (23) besteht, wobei ein Ende des Riegelbolzens (23) in Gebrauchsstellung den Handhebel (6) überragt.

6. Kupplungsvorrichtung nach Anspruch 5, dadurch gekennzeichnet, daß der Riegelbolzen (23) federbelastet ist, vorzugsweise durch eine Druckfeder (44), die auf dem Riegelbolzen (23), im Bereich des Gehäuses (22) geführt ist.

7. Kupplungsvorrichtung nach Anspruch 4, dadurch gekennzeichnet, daß der Riegelbolzen (23) mit einer Hülse (28) verbunden ist, die auf dem Handhebel (6) axial verschiebbar gelagert ist.

8. Kupplungsvorrichtung nach Anspruch 1, bei der die Aufnahmevorrichtung einen die Kugel (32) tragenden Schaft (34) aufweist, dadurch gekennzeichnet, daß der Schaft (34) an einem Bock (29) festgelegt ist, der an einer an tragenden Teilen des Zugfahrzeuges angeschlossenen Traverse (33) befestigt ist.

9. Kupplungsvorrichtung nach Anspruch 8, dadurch gekennzeichnet, daß der Schaft (34) auf seinem der Kugel (32) abgewandten Ende mit einem Gewindebolzen (35) versehen ist, der eine Durchgangsbohrung (39) des Aufnahmeteiles (31) durchtritt und auf den eine Mutter (36) aufschraubbar ist.

10. Kupplungsvorrichtung nach Anspruch 8, dadurch gekennzeichnet, daß der Schaft (34) verdrehsicher in dem Aufnahmeteil (31) angeordnet ist.

11. Kupplungsvorrichtung nach einem der Ansprüche 8 bis 10, dadurch gekennzeichnet, daß der Bock (29) mit mehreren, vorzugsweise zwei parallel und mit Abstand zueinander angeordneten Wülsten (42) versehen ist.

12. Kupplungsvorrichtung nach einem der Ansprüche 1 bis 11, dadurch gekennzeichnet, daß an dem der Kugelpfanne (2) zugewandten Endbereich des Handhebels (6) ein sich in Richtung des Bockes (29) erstreckender Peilstab (19) festgelegt ist.

13. Kupplungsvorrichtung nach Anspruch 9, dadurch gekennzeichnet, daß an dem Gehäuse (22) eine Skala (24) und an dem Riegelbolzen (23) ein Markierungsteil (25) vorgesehen sind, wobei das relativ zur Skala (24) bewegbare Markierungsteil (25) zu der Skala (24) hin gerichtet ist.

## Claims

1. A coupling apparatus comprising a ball head coupling which can be fixed to a semi-trailer and a receiving arrangement which can be connected to the platform surface of a towing vehicle and which is provided with a ball (32), wherein the ball head coupling has a coupling housing (1), to the top side of which is fixed a fixing flange (11), and is provided with a pivotable ball cup (2) which can be arrested in the closed position and a hand lever (6) which is mounted on a pivot axis (7) arranged in the coupling housing (1) and which in the closed position of the ball cup (2) bears against same at the rear side thereof, the hand lever (6) being urged towards the locking position by a spring (8), characterised in that there is provided a blocking device (12) with which the hand lever (6) is held in the release position and which can be brought out of engagement by the ball cup (2) or portions connected thereto.

2. A coupling apparatus according to claim 1 characterised in that the blocking device has at least one spring-loaded pivotable lock member (17) which is pivotable transversely relative to the direction of movement of the hand lever (6) and which in the position of use bears blockingly against the hand lever (6).

3. A coupling apparatus according to claim 2 characterised in that when the ball cup (2) opens the pivotable lock member (17) can be urged out of the blocking position by a contact pressure limb (5) formed on the ball cup.

4. A coupling apparatus according to claim 1 characterised in that there is provided a locking member (21) which is displaceable transversely with respect to the hand lever (6) and which blocks the hand lever (6) in the closed position of the ball cup (2) by engaging in or over same.

5. A coupling apparatus according to claim 4 characterised in that the locking member (21) comprises a housing (22) which is fixed to the underside of the fixing flange (11) and a locking pin (23) which is mounted in the housing (22) and which issues at two sides of the housing (22), wherein one end of the locking pin (23) projects over the hand lever (6) in the position of use.

6. A coupling apparatus according to claim 5 characterised in that the locking pin (23) is spring-loaded, preferably by a compression spring (44) which is guided on the locking pin (23) in the region of the housing (22).

7. A coupling apparatus according to claim 4 characterised in that the locking pin (23) is connected to a sleeve (28) which is axially slidably mounted on the hand lever (6).

8. A coupling apparatus according to claim 1 wherein the receiving arrangement has a shank (34) carrying the ball (32) characterised in that the shank (34) is secured to a support (29) fixed to a transverse member (33) connected to load-bearing members of the towing vehicle.

9. A coupling apparatus according to claim 8 characterised in that on its end remote from the ball (32) the shank (34) is provided with a screwthreaded pin (35) which passes through a through bore (39) in the mounting member (31) and on to which a nut (36) can be screwed.

10. A coupling apparatus according to claim 8 characterised in that the shank (34) is non-rotatably arranged in the mounting member (31).

11. A coupling apparatus according to one of claims 8 to 10 characterised in that the support (29) is provided with a plurality of and preferably two beads (42) which are arranged parallel and at a spacing relative to each other.

12. A coupling apparatus according to one of claims 1 to 11 characterised in that a measuring rod (19) extending in the direction of the support (29) is fixed to the end region of the hand lever (6), that is towards the ball cup (2).

13. A coupling apparatus according to claim 9 characterised in that a scale (24) is provided on the housing (22) and a marking member (25) is provided on the locking pin (23), wherein the marking member (25) which is movable relative to the scale (24) is directed towards the scale (24).

## Revendications

1. Dispositif d'accouplement avec un accouplement à tête sphérique se fixant sur une remorque-plateforme et avec un dispositif de réception muni d'une boule (32) et s'assemblant à la surface de plate-forme d'un véhicule de traction, l'accouplement à tête sphérique présentant un boîtier d'accouplement (1), sur la surface supérieure duquel est fixée une bride de fixation (11), et avec un coussinet sphérique (2) pivotant et immobilisable en position de fermeture, et un levier à main (6) monté sur un axe de pivotement (7) placé dans le boîtier d'accouplement (1), levier qui, dans la position de fermeture du coussinet sphérique (2), s'appuie à l'arrière contre celui-ci, le levier à main (6) étant poussé par un ressort (8) en direction de la position de verrouillage, caractérisé en ce qu'un dispositif de blocage (12) est prévu, par lequel le levier à main (6) est maintenu en position de déverrouillage, et qui peut être amené hors de prise par le coussinet sphérique (2) ou des pièces reliées à lui.

2. Dispositif d'accouplement selon la revendication 1, caractérisé en ce que le dispositif de blocage présente au moins un verrou pivotant (17) monté sur ressort, qui peut pivoter transversalement à la direction de mouvement du levier à main (6) et s'appuie, dans la position de service, de manière bloquante contre le levier à main (6).

3. Dispositif d'accouplement selon la revendication 2, caractérisé en ce que le verrou pivotant (17), lors de l'ouverture du coussinet sphérique (2), peut être repoussé de la position de blocage par une aile de poussée (5) que comporte celui-ci.

4. Dispositif d'accouplement selon la revendication 1, caractérisé en ce qu'est prévue une partie de verrou (21) mobile transversalement au levier à main (6), qui bloque le levier à main (6) dans la position de fermeture du coussinet sphérique (2), par engagement ou chevauchement.

5. Dispositif d'accouplement selon la revendication 4, caractérisé en ce que la partie de verrou (21) est constituée d'un boîtier (22), qui est fixé sur la face inférieure de la bride de fixation (11), et d'un goujon de verrouillage (23) monté dans le boîtier (22) et sortant sur deux côtés du boîtier (22), une extrémité du goujon de verrouillage (23) dépassant le levier à main (6) dans la position de service.

6. Dispositif d'accouplement selon la revendication 5, caractérisé en ce que le goujon de verrouillage (23) est monté sur ressort, de préférence par un ressort (44) travaillant en compression, qui est guidé sur le goujon de verrouillage (23) au niveau du boîtier (22).

7. Dispositif d'accouplement selon la revendication 4, caractérisé en ce que le goujon de verrouillage (23) est relié à une douille (28), qui est montée mobile dans le sens axial sur le levier à main (6).

8. Dispositif d'accouplement selon la revendication 1, dans lequel le dispositif de réception présente une tige (34) portant la boule (32), caractérisé en ce que la tige (34) est fixée à un chevalet (29), qui est fixé à une traverse (33) raccordée à des parties porteuses du véhicule de traction.

9. Dispositif d'accouplement selon la revendication 8, caractérisé en ce que la tige (34), à son extrémité opposée à la boule (32), est munie d'une tige filetée (35), qui traverse un perçage traversant (39) de la pièce de réception (31) et sur laquelle se visse un écrou (36).

10. Dispositif d'accouplement selon la revendication 8, caractérisé en ce que la tige (34) est montée bloquée en rotation dans la pièce de réception (31).

11. Dispositif d'accouplement selon l'une des revendications 8 à 10, caractérisé en ce que le chevalet (29) est muni de plusieurs, de préférence deux, bourrelets (42) parallèles et espacés entre eux.

12. Dispositif d'accouplement selon l'une des revendications 1 à 11, caractérisé en ce que, dans la zone d'extrémité du levier à main (6) tournée vers le coussinet sphérique (2), est fixée une sonde de niveau (19) s'étendant en direction du chevalet (29).

13. Dispositif d'accouplement selon la revendication 9, caractérisé en ce qu'il est prévu une échelle (24) sur le boitier et une partie de repérage (25) sur le goujon de verrouillage (23), la partie de repérage (25) mobile par rapport à l'échelle (24) étant tournée vers l'échelle (24).
